# EUROPEAN PATENT APPLICATION

(11) **EP 4 276 999 A1**
(43) Date of publication of application: **15.11.2023**
(21) Application number: 22745712.4
(22) Date of filing: 20.01.2022
(51) Int. Cl.: H01M 50/342, H01M 50/103, H01M 50/15

(54) **SAFETY VALVE, BATTERY CASE, AND SAFETY VALVE FORMATION METHOD**

(30) Priority: 27.01.2021 JP 2021011393
(71) Applicant: Toyo Seikan Co., Ltd., Tokyo 141-8640 (JP)
(72) Inventor: OSAFUNE, Tatsuya, Yokohama-shi, Kanagawa 230-0001 (JP)
(74) Representative: Canzler & Bergmeier Patentanwälte Partnerschaft mbB
(86) International application number: PCT/JP2022/001987
(87) International publication number: WO 2022/163491

(57) **Abstract**

Provided are: a safety valve which can be easily manufactured without the need for high-precision facilities and manufacturing techniques; a battery case provided with said safety valve; and a method for forming said safety valve. A safety valve is formed in a battery case so as to be partially thin-walled. The safety valve comprises: a flat section; and a groove that is formed on the peripheral edge of the flat section and that is recessed toward the inside of the battery case. When the internal pressure within the battery case reaches or exceeds a predetermined explosion-prevention pressure, the recessed shape of the groove becomes inverted so that the groove protrudes toward the outside of the battery case and a crack is formed, causing the groove to open.

## Description

### Technical field

The present invention relates to a safety valve for a battery, a battery case including the safety valve, and a method of forming the safety valve.

### Background art

As a power source for a device such as a cellular phone, a digital camera, and a notebook computer, a secondary battery, for example, a lithium-ion secondary battery has been widely used. For this secondary battery, a battery case as a housing of the secondary battery has a high-sealed structure to prevent electrolytic solution leakage from the inside, and invasion of water from the outside.

Meanwhile, when this sort of battery is increased in temperature due to deterioration, or overcharged due to an excessively high voltage, electrolytes in the electrolytic solution are volatilized or decomposed to generate gas. This gas is confined in the enclosed space to rapidly increase the pressure (internal pressure) of the battery case. This causes a risk of expanding and deforming the battery case, and therefore the battery case is busted.

To solve the above-described problem, in many cases, this sort of battery includes a safety valve configured to open due to an increase in the internal pressure, in order to efficiently discharge the gas generated in the battery case. For example, Patent Literature 1 describes that a safety valve includes a notch whose thickness is significantly smaller than other parts of the safety valve, and the gas generated in the battery case is discharged by opening the notch.

### Citation list

### Patent Literature

PTL1: Japanese Patent Application Laid-Open No. 2015-15098

### Summary of Invention

### Problem to be solved by the invention

However, the safety valve described in Patent Literature 1 needs adjustment to reduce the thickness of the notch within an allowance of 10 to several tens of µm, in order to control the internal pressure (explosion-proof pressure) for the opening. This makes it difficult to manufacture the safety valve, and therefore high-precision equipment and manufacturing technology are required.

In addition, it is difficult for this safety valve to increase the productivity because the yield is reduced until the size (dimension) of the thickness is stabilized. Moreover, when being manufactured, the notch having a significantly small thickness is prone to crack, and it is difficult to test this notch.

The present invention has been achieved considering the above-described circumstances to address the above-described problems. It is therefore an aspect of the object of the invention to provide a safety valve being able to be easily manufactured without need of high-precision equipment and manufacturing technology, a battery case including the safety valve, and a method of forming the safety valve.

### Means for solving the problem

According to the invention, a safety valve having a thickness partially reduced in a battery case includes a flat part, and a groove formed around the flat part and being concave toward an inside of the battery case. When an internal pressure of the battery case is equal to or higher than a predetermined explosion-proof pressure, a concave shape of the groove is reversed to protrude outward from the battery case, so that the groove is cracked and therefore opened.

A battery case according to the invention includes the safety valve according to the invention.

According to the invention, a method of forming a safety valve having a thickness partially reduced in a battery case includes applying a pressure to the battery case in a thickness direction by using a shaping die to form the safety valve including a flat part, and a groove formed around the flat part and being concave toward an inside of the battery case. When an internal pressure of the battery case is equal to or higher than a predetermined explosion-proof pressure, a concave shape of the groove is reversed to protrude outward from the battery case, so that the groove is cracked and therefore opened.

### Effect of the invention

According to the invention, it is possible to provide a safety valve being able to be easily manufactured without need of high-precision equipment and manufacturing technology, a battery case including the safety valve, and a method of forming the safety valve.

### Brief Description of Drawings

Fig. 1 is an external perspective view illustrating a battery case;
Fig. 2 is a perspective view illustrating a lid;
Fig. 3 is an enlarged perspective view illustrating an enlarged part of the lid including a safety valve;
Fig. 4 illustrates the shape of a cross-section of the safety valve illustrated in Fig. 3;
Fig. 5 shows partial cross-sectional views illustrating examples of the shape of the safety valve;
Fig. 6 shows partial cross-sectional views illustrating examples of the shape of the safety valve;
Fig. 7 shows partial cross-sectional views illustrating examples of the shape of the safety valve;
Fig. 8 shows partial cross-sectional views illustrating examples of the shape of the safety valve;
Fig. 9 shows partial cross-sectional views illustrating examples of the shape of the safety valve;
Fig. 10 shows partial cross-sectional views illustrating examples of the shape of the safety valve;
Fig. 11 shows cross-sectional views illustrating deformation and opening of the safety valve; and
Fig. 12 is an enlarged perspective view illustrating an enlarged part of another example of the safety valve in the lid.

### Description of Embodiments

Hereinafter, an embodiment of the invention (present embodiment) will be described with reference to the drawings.

### <Battery case>

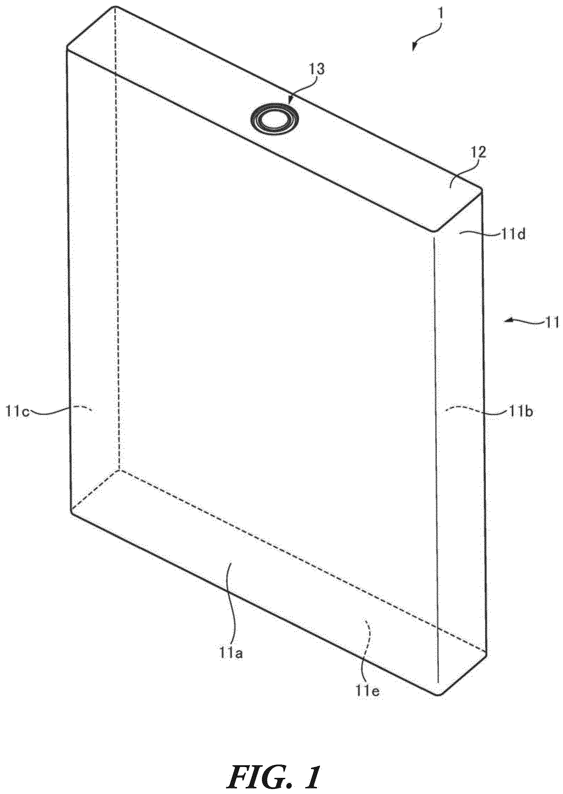

A battery case (battery housing) 1 illustrated in Fig. 1 is molded as a rectangular battery case for a secondary battery by press molding by combination of drawing and ironing a plate material made of metal such as aluminum and aluminum alloy. Here, the metal material for forming the battery case 1 is not limited to aluminum and aluminum alloy, but may be stainless steel, or a material other than the metal material is possible.

As illustrated in Fig. 1, the battery case 1 includes a storage 11 configured to accommodate power generating elements (such as electrodes, and an electrolytic solution) of the secondary battery, and a lid 12 including a safety valve 13 described later. The storage 11 is constituted by a front surface 11a, a back surface 11b, side surfaces 11c and 11d, and a bottom surface 11e, and has a box shape having a space in which the power generating elements of the secondary battery can be accommodated. In this storage 11, the area of each of the front surface 11a and the back surface 11b is wider than the area of each of the side surfaces 11c and 11d.

The opening side of the storage 11 is sealed by bonding the lid 12 by welding process and the like. In this way, the lid 12 is provided on the storage 11, and therefore the battery case (battery housing) 1 includes an enclosed space which is completely shielded from the outside. In fact, the opening side of the storage 11 is sealed with the lid 12 while the power generating elements of the secondary battery are accommodated in the storage 11, and by this means, the battery case 1 becomes a secondary battery such as a lithium-ion secondary battery.

### <Lid>

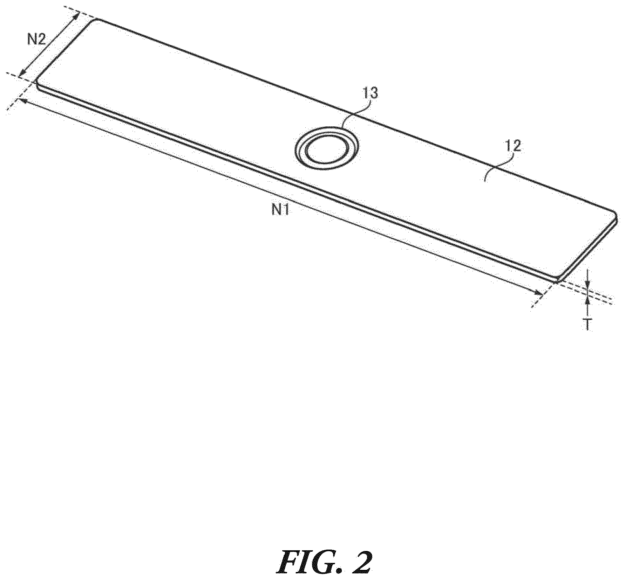

The lid 12 which is an end plate of the battery case 1 is formed by processing a plate material made of metal such as aluminum and aluminum alloy. As illustrated in Fig. 1 and Fig. 2, a safety valve 13 is formed at approximately the center of the lid 12 in the longitudinal direction of the plane of the lid 12. It is preferred that the safety valve 13 is formed at approximately the center of the lid 12 in the longitudinal direction of the plane of the lid 12 to prevent the effect of the welding process and the like, for bonding the lid 12 to the storage 11. However, this is by no means limiting, but the safety valve 13 may be formed in other positions in the lid 12.

Length N1 of the lid 12 in the longitudinal direction is not particularly limited, but may be, for example, 100 mm to 150 mm. Length N2 of the lid 12 in the shorter direction is not particularly limited, but may be, for example, 10 mm to 30 mm.

Plate thickness T of the lid 12 is not particularly limited, but may be, for example, 1.5 mm to 2.0 mm.

The lid 12 may include other components (such as terminals) (not illustrated) of the secondary battery in positions different from the safety valve 13.

### <Safety Valve>

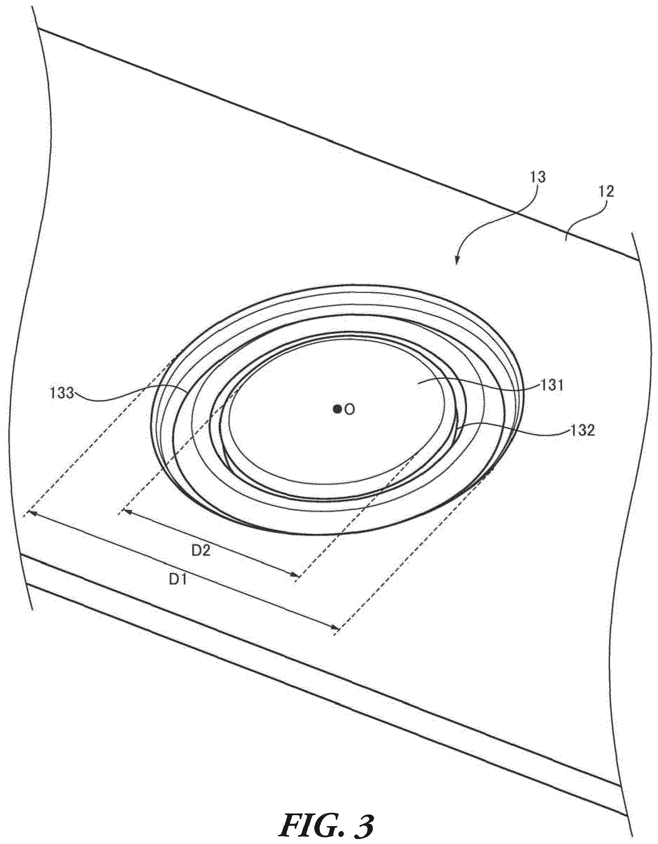

The safety valve 13 illustrated in Fig. 3 has a structure to efficiently discharge the gas generated in the battery case 1 to the outside to prevent explosion, and is configured to be actuated when the pressure (internal pressure) of the battery case 1 is equal to or higher than a predetermined explosion-proof pressure. The safety valve 13 is formed by press molding the metal plate material of the lid 12 to partially reduce the thickness of the lid 12, and includes a flat part 131, and a groove 132 formed around the flat part 131 and being concave toward the inside of the battery case 1.

Here, the value of the predetermined explosion-proof pressure is not particularly limited, but may be controlled by various sizes described in the embodiment (the length N1 and the length N2 of the lid 12, plate thickness T, plate thickness t, diameter D1, diameter D2, angle Θ1, angle Θ2, height H1, height H2, groove width L, and R dimension), and the shape of the safety valve 13. This predetermined explosion-proof pressure may be, for example, 0. 5 MPa to 2 MPa, and may be 1 MPa.

As illustrated in Fig. 3, a recess 133 may be formed more outside of the groove 132 with respect to the flat part 131, depending on the shape and the position of the groove 132 in the safety valve 13.

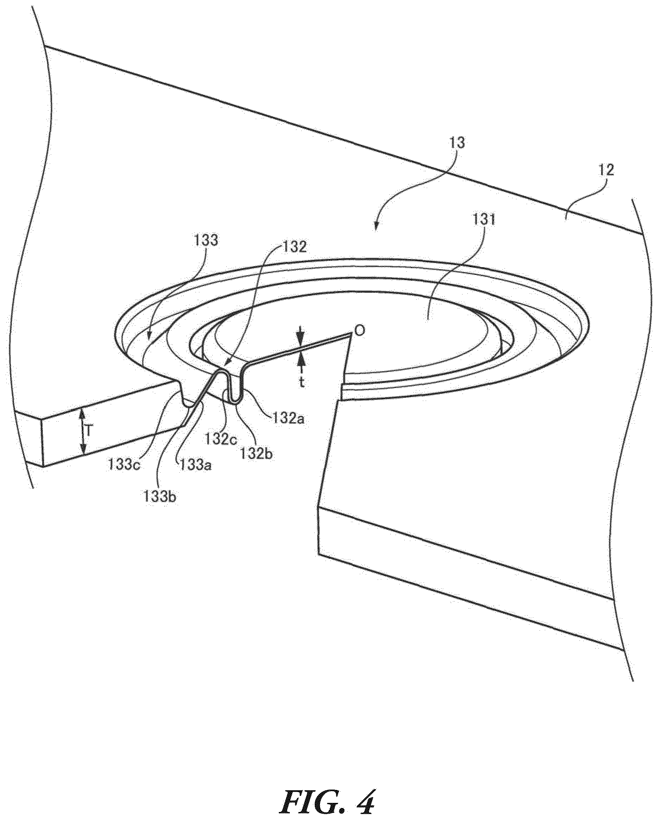

As illustrated in Fig. 4, the plate thickness t of the safety valve 13 which is thinner than the lid 12 is not particularly limited, but when the plate thickness T of the lid 12 is 1.5 mm to 2.0 mm as described above, the plate thickness t may be, for example, 0.1 mm to 0.5 mm. Here, the plate thickness T of the lid 12 and the plate thickness t of the safety valve 13 may be adjusted appropriately, depending on the explosion-proof pressure of the battery case 1. In addition, the plate thickness t of the safety valve 13 may be uniform or not be uniform across the whole of the safety valve 13.

As illustrated in Fig. 3 and Fig. 4, the shape of the safety valve 13 (that is, the shape of the outer edge of the recess 133) has an approximately circular shape around a central point O. The diameter D1 of the approximately circular safety valve 13 is not particularly limited, but may be, for example, 7 mm to 15 mm.

The flat part 131 has an approximately circular shape around the central point O. The flat part 131 is a thin panel having an approximately circular shape. Therefore, when gas is generated in the battery case 1, the internal pressure increased due to the generated gas is applied to the surface (inner surface) of the flat part 131 inside the battery case 1, and therefore the inner surface of the flat plate 131 is deformed to be curved in a convex shape toward the outside of the battery case 1.

The flat part 131 has an approximately circular shape without any corner, and therefore its inner surface can uniformize the stress for the internal pressure of the battery case 1. If the flat part 131 has a rectangular shape with corners, it is not preferable because the stress for the internal pressure focuses on the corners in the inner surface of the flat part 131.

The diameter D2 of the approximately circular flat part 131 is not particularly limited, but may be, for example, 5 mm to 10 mm.

As illustrated in Fig. 4, the groove 132 includes an inner circumferential side 132a connecting to the flat part 131, a bottom 132b connecting to the inner circumferential side 132a, and an outer circumferential side 132c connecting to the bottom 132b. As illustrated in Fig. 4, the recess 133 includes an inner circumferential side 133a, a bottom 133b connecting to the inner circumferential side 133a, and an outer circumferential side 133c connecting to the bottom 133b.

The groove 132 is deformed to reduce the inside depth due to an increase in the internal pressure of the battery case 1. Then, when the internal pressure of the battery case 1 is equal to or higher than the predetermined explosion-proof pressure, the concave shape of the groove 132 is reversed to protrude outward from the battery case 1. By this means, the groove 132 is cracked, and therefore opened. The gas is released from the opening, and therefore it is possible to prevent the battery case 1 from being severely broken.

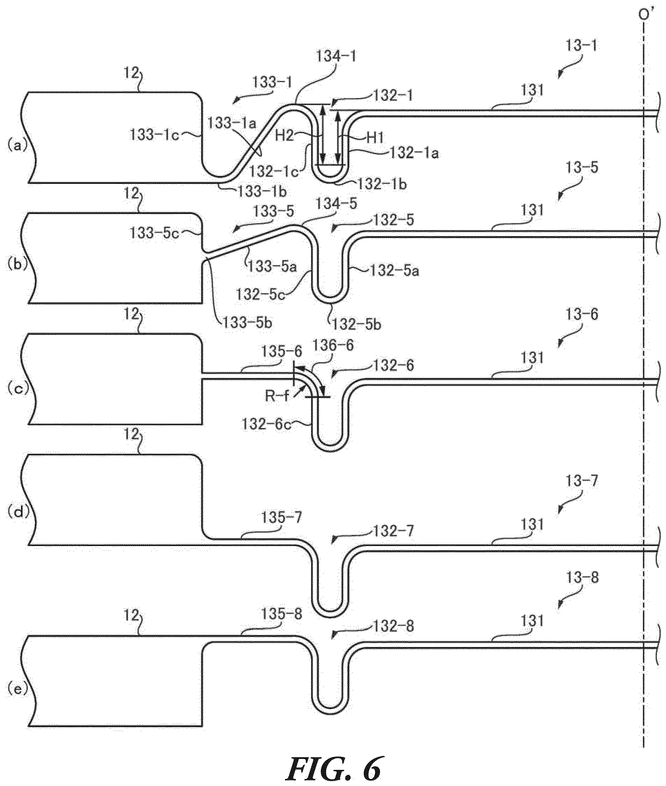

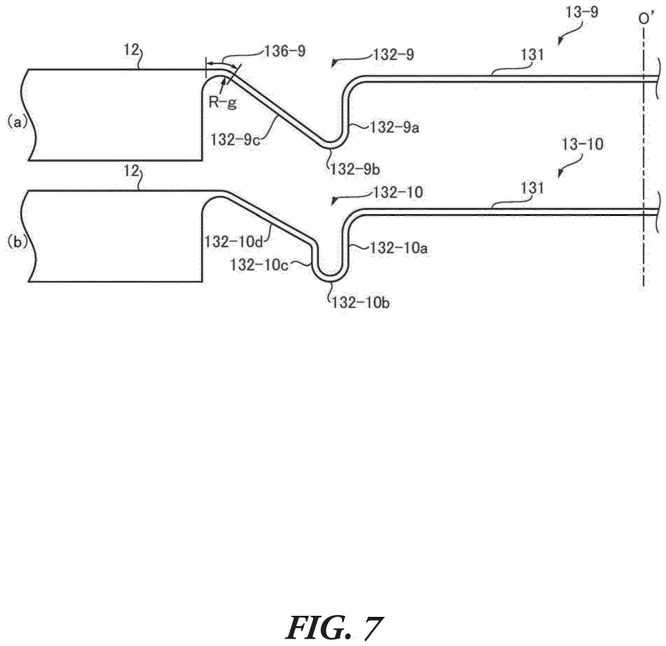

Here, as described later, the safety valve 13 having a reduced thickness may include only the groove 132 on the outer edge of the flat part 131 (see Fig. 7(a)), which is different from the example illustrated in Fig. 1 to Fig. 4. Alternatively, the safety valve 13 may be formed such that the groove 132 is formed on the outer edge of the flat part 131, and an outer flat part having a plane direction approximately parallel to the plane direction of the flat surface 131 is formed on the outer edge of the groove 132 (see Fig. 6(c) to Fig. 6 (e)).

### <Configuration examples of Safety valve>

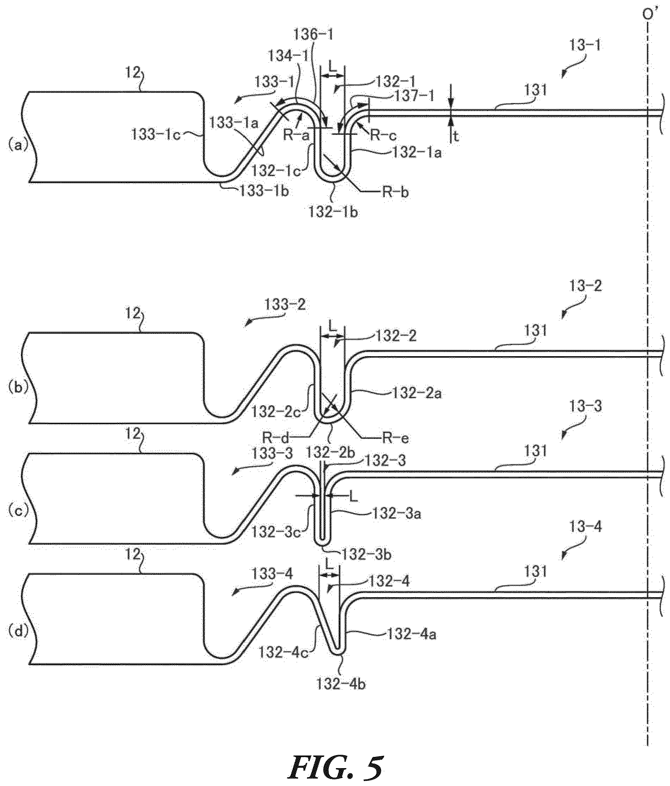

Next, several examples of the specific configuration of the safety valve 13 will be described. Figs. 5(a) to 5(d), Figs. 6(a) to (e), Figs. 7(a) and (b), Figs. 8(a) to (c), Figs. 9(a) to (c), and Figs. 10(a) to (f) are partial cross-sectional views illustrating examples of the shape of the safety valve 13, passing through a central axis O' (which passes through the central point O and is vertical to the flat part 13).

A safety valve 13-1 illustrated in Fig. 5(a) includes a groove 132-1 formed on the outer edge of the flat part 131, and a recess 133-1 formed on the outer edge of the groove 132-1. The groove 132-1 includes an inner circumferential side 132-1a connecting to the flat part 131, a bottom 132-1b connecting to the inner circumferential part 132-1a, and an outer circumferential side 132-1c connecting to the bottom 132-1b. The recess 133-1 includes an inner circumferential side 133-1a, a bottom 133-1b connecting to the inner circumferential side 133-1a, and an outer circumferential side 133-1c connecting to the bottom 133-1b. The outer circumferential side 132-1c of the groove 132-1 and the inner circumferential side 133-1a of the recess 133-1 are connected to one another via a connecting point 134-1.

In a cross-sectional view passing through the central axis O', a boundary 136-1 including the connecting point 134-1 between the outer circumferential side 132-1c of the groove 132-1 and the inner circumferential side 133-1a of the recess 133-1 formed on the outer edge of the groove 132-1 has a curved shape without any corner.

In this way, in the safety valve 13, the boundary between the outer circumferential side 132c of the groove 132 and the inner circumferential side 133a of the recess 133 has a curved shape without any corner in the cross-sectional view passing through the central axis O'. In the safety valve 13, the R dimension (radius of curvature R-a) of the inside of the curved shape of the boundary (the boundary 136-1 of the safety valve 13-1) between the outer circumferential side 132c of the groove 132 and the inner circumferential side 133a of the recess 133 may be uniform or not be uniform in the cross-sectional view passing through the central axis O'. It is preferred that this R dimension (radius of curvature R-a) is 0.2 mm to 0.5 mm.

In the cross-sectional view passing through the central axis O', when the safety valve 13 has the plate thickness t, the groove width L which is the distance between the straight part of the outer circumferential side 132c and the straight part of the inner circumferential side 132a (the distance between the straight part of the outer circumferential side 132-1c and the straight part of the inner circumferential side 132-1a in the safety valve 13-1) in the inside of the groove 132 of the safety valve 13 may be 0 mm to tx10 mm (that is, ten times as much as the plate thickness t). Here, in the case of the groove 132-1 of the safety valve 13-1 illustrated in Fig. 5(a), the groove width L may be 0.4 mm.

In addition, the bottom 132b (the bottom 132-1b of the safety valve 13-1) has a curved shape without any corner in the cross-sectional view passing through the central axis O'. The R dimension (radius of curvature R-b) of the inside of the bottom 132b, which is an indicator of the curved shape of the bottom 132b (the bottom 132-1b of the safety valve 13-1), may be 0.1 mm to 1.0 mm. The straight part of the outer circumferential side 132-1c and the straight part of the inner circumferential side 132-1a are parallel to one another. Therefore, the groove width L of the groove 132-1 of the safety valve 13-1 may be uniform in the thickness direction. In addition, the R dimension (radius of curvature R-b) of the safety valve 13-1 may be uniform in the inside of the curved shape of the bottom 132b of the groove 132-1.

The smaller the groove width L is, the more the groove 132 is prone to crack. Likewise, the smaller the R dimension (radius of curvature R-b) is, the more the groove 132 is prone to crack. Here, in consideration of satisfying both the ease of cracking and the pressure resistance described later, it is preferred that the groove width L is 0 mm to tx100 mm, and the R dimension (radius of curvature R-b) is 0.1 mm to 1.0 mm.

Moreover, a boundary 137-1 of the inner circumferential side 132-1a of the groove 132-1 with the flat part 131 has a curved shape without any corner in the cross-sectional view passing through the central axis O' of Fig. 5(a).

In this way, in the safety valve 13, the boundary (the boundary 137-1 of the safety valve 13-1) of the inner circumferential side 132a (the inner circumferential side 132-1a of the safety valve 13-1) with the flat part 131 has a curved shape without any corner, in the cross-sectional view passing through the central axis O'. In the safety valve 13, the R dimension (radius of curvature R-c) of the inside of the curved shape of the boundary (the boundary 137-1 of the safety valve 13-1) of the inner circumferential side 132a of the groove 132 (the inner circumferential side 132-1a of the safety valve 13-1) with the flat part 131 may be uniform or not be uniform, in the cross-sectional view passing through the central axis O'. It is preferred that the R dimension (radius of curvature R-c) of the inside of the curved shape is 0.1 mm to 0.4 mm.

That is, in the safety valve 13, each of the boundary (the boundary 136-1 of the safety valve 13-1) between the outer circumferential side 132c of the groove 132 and the inner circumferential side 133a of the recess 133; the bottom 132b (the bottom 132-1b of the safety valve 13-1); and the boundary (the boundary 137-1 of the safety valve 13-1) of the inner circumferential side 132a of the groove 132 (the inner circumferential side 132-1a of the safety valve 13-1) with the flat part 131 has a curved shape without any corners, in the cross-sectional view passing through the central axis O'.

A safety valve 13-2 illustrated in Fig. 5(b) includes a groove 132-2 on the outer edge of the flat part 131, and a recess 133-2 on the outer edge of the groove 132-2. In the inside of the groove 132-2, the groove width L which is the distance between the straight part of an outer circumferential side 132-2c and the straight part of an inner circumferential side 132-2a parallel to one another may be 0.4 mm in the same way as Fig. 5(a), in the cross-sectional view passing through the central axis O'. Here, in the inside of the bottom 132-2b of the groove 132-2, the R dimension (radius of curvature R-d) on the outer circumferential side 132-2c may be 0,1 mm, and the R dimension (radius of curvature R-e) on the inner circumferential side 132-2a may be 0.3 mm as illustrated in Fig. 5(b).

In this regard, the safety valve 13-2 illustrated in Fig. 5(b) is different from the safety valve 13-1 illustrated in Fig. 5(a), but may have the same configuration as that of the safety valve 13-1 except for that. In this way, the R dimension of the inside of the bottom 132b may vary depending on the positions in the inside of the bottom 132b.

A safety valve 13-3 illustrated in Fig. 5(c) includes a groove 132-3 on the outer edge of the flat part 131, and a recess 133-3 on the outer edge of the groove 132-3. In the inside of the groove 132-3, an outer circumferential side 132-3c and an inner circumferential side 132-3a connecting to a bottom 132-3b are close to one another in the cross-sectional view passing through the central axis O'. In the inside of the groove 132-3, the groove width L which is the distance between the outer circumferential side 132-3c and the inner circumferential side 132-3a is not particularly limited, but may be a very small value, for example, 0.1 mm or smaller. Alternatively, the outer circumferential side 132-3c and the inner circumferential side 132-3a may contact one another in the cross-sectional view passing through the central axis O'.

In this regard, the safety valve 13-3 illustrated in Fig.5(c) is different from the safety valve 13-1 illustrated in Fig. 5(a), but may have the same configuration as that of the safety valve 13-1 except for that.

A safety valve 13-4 illustrated in Fig. 5(d) includes a groove 132-4 on the outer edge of the flat part 131, and a recess 133-4 on the outer edge of the groove 132-4. In the inside of the groove 132-4, the groove width L which is the distance between an outer circumferential side 132-4c and an inner circumferential side 132-4a is gradually increased from a bottom 132-4b to the opening side in the cross-sectional view passing through the central axis O'. In this way, the groove width L may vary depending on the positions in the groove 132 in the thickness direction. In this regard, the safety valve 13-4 illustrated in Fig. 5(d) is different from the safety valve 13-1 illustrated in Fig. 5(a), but may have the same configuration as that of the safety valve 13-1 except for that.

Fig. 6(a) illustrates the safety valve 13-1 illustrated in Fig. 5(a). In the cross-sectional view passing through the central axis O', the greater the height H1 of the inner circumferential side 132a and the height H2 of the outer circumferential side 132c inside the groove 132 in the thickness direction are, the higher the pressure resistance against the internal pressure of the battery case 1 is. The height H1 of the inner circumferential side 132a (the inner circumferential side 132-1a of the safety valve 13-1) inside the groove 132 in the thickness direction may be, for example, 0.8 mm to 1.7 mm. The height H2 of the outer circumferential side 132c (the outer circumferential side 132-1c of the safety valve 13-1) inside the groove 132 in the thickness direction may be, for example, 0 mm to 1.7 mm.

In addition, the closer the position of the groove 132 to the central axis O' in the horizontal direction is, the higher the pressure resistance against the internal pressure is. For this, it is possible to adjust the position of the groove 132 in the horizontal direction by adjusting the size of the diameter D2 of the flat part 131.

A safety valve 13-5 illustrated in Fig. 6(b) includes a groove 132-5 on the outer edge of the flat part 131, and a recess 133-5 on the outer edge of the groove 132-5. The groove 132-5 includes an inner circumferential side 132-5a connecting to the flat part 131, a bottom 132-5b connecting to the inner circumferential side 132-5a, and an outer circumferential side 132-5c connecting to the bottom 132-5b. The recess 133-5 includes an inner circumferential side 133-5a, a bottom 133-5b connecting to the inner circumferential side 133-5a, and an outer circumferential side 133-5c connecting to the bottom 133-5b. The outer circumferential side 132-5c of the groove 132-5 and the inner circumferential side 133-5a of the recess 133-5 connect to one another via a connecting point 134-5.

With the example illustrated in Fig. 6(a), the outmost position of the safety valve 13-1 formed by the press molding (the position of the bottom 133-1b of the recess 133-1) is the lowest position of the lid 12 in the thickness direction. Meanwhile, with the example illustrated in Fig. 6(b), the outmost position of the safety valve 13-5 formed by the press molding (the position of the bottom 133-5b of the recess 133-5) is approximately the middle position of the lid 12 in the thickness direction. By this means, the safety valve 13-1 illustrated in Fig. 6(a) includes the recess 133-1 which is more convex than the recess 133-5 of the safety valve 13-5 illustrated in Fig. 6(b). In this regard, the safety valve 13-5 illustrated in Fig. 6(b) is different from the safety valve 13-1 illustrated in Fig. 6(a), but may have the same configuration as that of the safety valve 13-1 except for that.

A safety valve 13-6 illustrated in Fig. 6(c) includes a groove 132-6 on the outer edge of the flat part 131. Here, with the example illustrated in Fig. 6(c), an outer flat part 135-6 having a plane direction approximately parallel to the plane direction of the flat surface 131 is formed on the outer edge of the groove 132-6.

In addition, with the example illustrated in Fig. 6(c), the position of the lid 12 to which the press molding is applied is approximately the middle of the lid 12 in the thickness direction. By this means, the groove 132-6 slightly protrude downward from the lower surface of the lid 12. In these regards, the safety valve 13-6 illustrated in Fig. 6(c) is different from the safety valve 13-1 illustrated in Fig. 6(a), but may have the same configuration as the safety valve 13-1 except for that.

A boundary 136-6 of the outer circumferential side 132-6c of the groove 132-6 with the outer flat part 135-6 has a curved shape without any corner.

In this way, in the safety valve 13, when the outer flat part is formed on the outer edge of the groove 132, the boundary (the boundary 136-6 of the safety valve 13-6) of the outer circumferential side 132-c of the groove 132 with the outer flat part has a curved shape without any corner, in the cross-sectional view passing through the central axis O'. In the safety valve 13, the R dimension (radius of curvature R-f) of the inside of the curved shape of the boundary (the boundary 136-6 of the safety valve 13-6) of the outer circumferential side 132c of the groove 132 with the outer flat part may be uniform or not be uniform, in the cross-sectional view passing through the central axis O'. It is preferred that the R dimension (radius of curvature R-f) of the inside of the curved shape is 0.2 mm to 0.5 mm.

A safety valve 13-7 illustrated in Fig. 6(d) includes a groove 132-7 formed on the outer edge of the flat part 131, and an outer flat part 135-7 formed on the outer edge of the groove 132-7, which have approximately the same configurations as those of the safety valve 13-6 illustrated in Fig. 6(c).

However, the safety valve 13-7 is different from the safety valve 13-6 illustrated in Fig. 6(c) in that the position of the lid 12 to which the press molding is applied is the lowest in the thickness direction of the lid 12. Therefore, the groove 132-7 of the safety valve 13-7 significantly protrudes downward from the lower surface of the lid 12.

In addition, a safety valve 13-8 illustrated in Fig. 6(e) includes a groove 132-8 formed on the outer edge of the flat part 131 and an outer flat part 135-8 formed on the outer edge of the groove 132-8, which have approximately the same configurations as those of the safety valve 13-6 illustrated in Fig. 6(c).

However, the safety valve 13-8 is different from the safety valve 13-6 illustrated in Fig. 6(c) in that the position of the lid 12 to which the press forming is applied is the highest in the thickness direction of the lid 12. Therefore, the groove 132-8 of the safety valve 13-8 does not protrude downward from the lower surface of the lid 12.

It is preferred that the safety valve 13 has a structure not to be broken by the impact from the outside, and not to obstruct the heat generating elements in the battery case 1. Therefore, among the various types of the safety valve 13 illustrated in Fig.6(a) to Fig. 6(e), it is particularly preferred that the components of the safety valve 13 do not protrude upward from the upper surface of the lid 12, and do not protrude downward from the lower surface of the lid 12 in the thickness direction (for example, Fig. 6(a), Fig. 6(b), and Fig. 6(e)).

In a safety valve 13-9 illustrated in Fig. 7(a), only a groove 132-9 is formed on the outer edge of the flat part 131. The groove 132-9 includes an inner circumferential side 132-9a connecting to the flat part 131, a bottom 132-9b connecting to the inner circumferential side 132-9a, and an outer circumferential side 132-9c connecting to the bottom 132-9b. In this regard, the safety valve 13-9 illustrated in Fig. 7(a) is different from the safety valve 13-1 illustrated in Fig. 5(a), but may have the same configuration as that of the safety valve 13-1 except for that. A boundary 136-9 of the outer circumferential side 132-9c of the groove 132-9 with the lid 12 has a curved shape without any corner.

In this way, in the safety valve 13, when the lid 12 is formed on the outer edge of the groove 132, the boundary (the boundary 136-9 of the safety valve 13-9) of the outer circumferential side 132c of the groove 132 with the lid 12 has a curved shape without any corner, in the cross-sectional view passing through the central axis O'. In the safety valve 13, the R dimension (radius of curvature R-g) of the inside of the curved shape of the boundary (the boundary 136-9 of the safety valve 13-9) of the outer circumferential side 132c of the groove 132 with the lid 12 may be uniform or not be uniform, in the cross-sectional view passing through the central axis O'. It is preferred that the R dimension (radius of curvature R-g) of the inside of the curved shape is 0.2 mm to 0.5 mm.

As illustrated in Fig. 7(a), the distance between the inner circumferential side 132-9a and the outer circumferential side 132-9c is gradually increased from the bottom 132-9b to the opening side. Therefore, the opening of the groove 132-9 is greater than those illustrated in Figs. 6(a) to 6(e).

In a safety valve 13-10 illustrated in Fig. 7(b), only a groove 132-10 is formed outside the flat part 131. The groove 132-10 has a shape obtained by processing the bottom 132-9b and the outer circumferential side 132-9c of the groove 132-9 illustrated in Fig. 7(a), and includes an inner circumferential side 132-10a, a bottom 132-10b, a first outer circumferential side 132-10c and a second outer circumferential side 132-10d.

In the safety valve 13-9 illustrated in Fig. 7(a), the outer circumferential side 132-9c of the groove 132-9 is approximately straight, in the cross-sectional view passing through the central axis O'. Meanwhile, in the safety valve 13-10 illustrated in Fig. 7(b), the outer circumferential side of the groove 132-10 is bent to form the first outer circumferential side 132-10c and the second outer circumferential side 132-10d, and a bottom 132-10b is formed in a shape the same as that of the bottom 132-1b illustrated in Fig. 5(a). The safety valve 13-10 including this groove 132-10 has a pressure resistance higher than that of the safety valve 13-9 including the groove 132-9 illustrated in Fig. 7(a). In this regard, the safety valve 13-10 illustrated in Fig. 7(b) is different from the safety valve 13-9 illustrated in Fig. 7(a), but may have the same configuration as that of the safety valve 13-9 except for that.

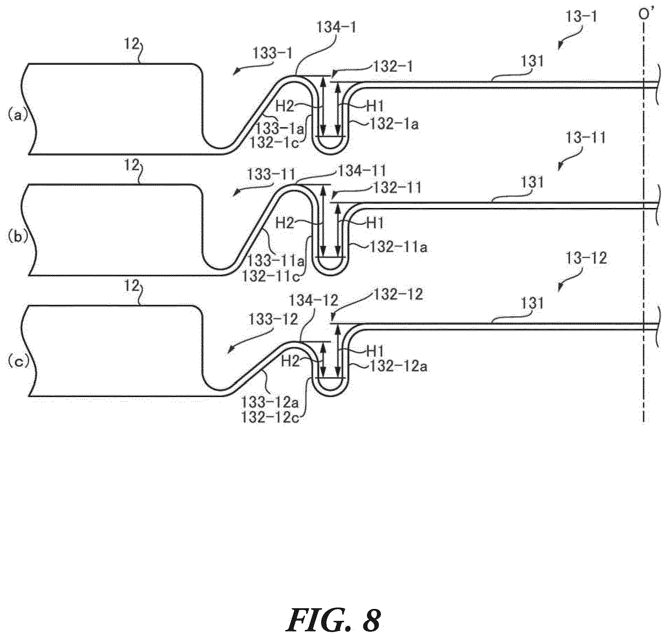

Fig. 8(a) illustrates the safety valve 13-1 illustrated in Fig. 5(a). In the safety valve 13-1, the position in height of the flat part 131 is approximately equal to the position in height of the connecting point 134-1 between the outer circumferential side 132-1c of the groove 132-1 and the inner circumferential side 133-1a of the recess 133-1 in the thickness direction (that is, the height H1 of the inner circumferential side 132-1a < the height H2 of the outer circumferential side 132-1c) .

Meanwhile, in a safety valve 13-11 illustrated in Fig. 8(b), the position in height of a connecting point 134-11 between an outer circumferential side 132-11c of a groove 132-11 and an inner circumferential side 133-11a of a recess 133-11 is higher than the position in height of the flat part 131 in the thickness direction (that is, the height H1 of the inner circumferential side 132-11a < the height H2 of the outer circumferential side 132-11c). In this regard, the safety valve 13-11 illustrated in Fig. 8(b) is different from the safety valve 13-1 illustrated in Fig. 8(a), but may have the same configuration as that of the safety valve 13-1 except for that.

In a safety valve 13-12 illustrated in Fig. 8(c), the position in height of the flat part 131 is higher than the position in height of a connecting point 134-12 between an outer circumferential side 132-12c of a groove 132-12 and an inner circumferential side 133-12a of a recess 133-12 in the thickness direction (that is, the height H2 of the outer circumferential side 132-12c < the height H1 of the inner circumferential side 132-12a). In this regard, the safety valve 13-12 illustrated in Fig. 8(c) is different from the safety valve 13-1 illustrated in Fig. 8(a), but may have the same configuration as that of the safety valve 13-1 except for that.

In each of the safety valves 13-1, 13-11, and 13-12 illustrated in Fig. 8(a) to Fig. 8(c), no part protrudes upward from the upper surface of the lid 12 and protrudes downward from the lower surface of the lid 12 in the thickness direction. The inner circumferential side 132-1a of the groove 132-1 of the safety valve 13-1, the inner circumferential side 132-11a of the groove 132-11 of the safety valve 13-11, and the inner circumferential side 132-12a of the groove 132-12 of the safety valve 13-12 have approximately the same height H1 in the thickness direction. Meanwhile, the height H2 of the outer circumferential side 132-11c of the groove 132-11 of the safety valve 13-11 in the thickness direction is the largest among the safety valves 13-1, 13-11, and 13-12. In addition, the height H2 of the outer circumferential side 132-12c of the groove 132-12 of the safety valve 13-12 in the thickness direction is the smallest.

Therefore, among the safety valves 13-1, 13-11, and 13-12 illustrated in Fig. 8(a) to Fig. 8(c), the pressure resistance of the safety valve 13-11 including the groove 132-11 is the highest, and the pressure resistance of the safety valve 13-12 including the groove 132-12 is the lowest.

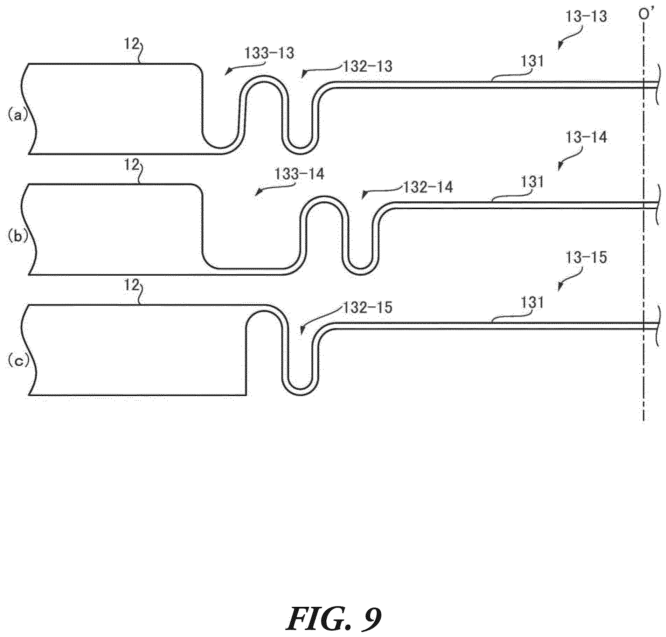

In a safety valve 13-13 illustrated in Fig. 9(a), a groove 132-13 in a shape the same as that of the groove 132-1 illustrated in Fig. 5(a) is formed on the outer edge of the flat part 131, and a recess 133-13 is formed on the outer edge of the groove 132-13. Here, the shape of the recess-133-13 of the safety valve 13-13 illustrated in Fig. 9(a) is different from that of the recess 133-1 illustrated in Fig. 5(a), but the safety valve 13-13 may have the configuration the same as that of the safety valve 13-1 except for that.

In a safety valve 13-14 illustrated in Fig. 9(b), a groove 132-14 in a shape the same as that of the groove 132-13 illustrated in Fig. 9(a) is formed on the outer edge of the flat part 131. However, the position of the groove 132-14 in the safety valve 13-14 in the horizontal direction is closer to the central axis O' than the groove 132-13 of the safety valve 13-13 illustrated in Fig. 9(a). Therefore, the safety valve 13-14 illustrated in Fig. 9(b) has a higher pressure resistance against the internal pressure of the battery case 1 than that of the safety valve 13-13 illustrated in Fig. 9(a). In addition, the internal space of a recess 133-14 of the safety valve 13-14 is larger than that of the recess 133-13 of the safety valve 13-13. In this regard, the safety valve 13-14 illustrated in Fig. 9(b) is different from the safety valve 13-13 illustrated in Fig. 9(a), but may have the same configuration as that of the safety valve 13-13 except for that.

Here, as a safety valve 13-15 illustrated in Fig. 9(c), only a groove 132-15 in a shape the same as that of the groove 132-13 illustrated in Fig. 9(a) may be formed on the outer edge of the flat part 131, and a recess may not be formed on the outer edge of the groove 132-15. Therefore, the outer diameter D1 of the safety valve 13-15 illustrated in Fig. 9(c) is smaller than the outer diameter D1 of the safety valve 13-13 illustrated in Fig. 9(a). In this regard, the safety valve 13-15 illustrated in Fig. 9(c) is different from the safety valve 13-13 illustrated in Fig. 9(a), but may have the same configuration as that of the safety valve 13-13 except for that.

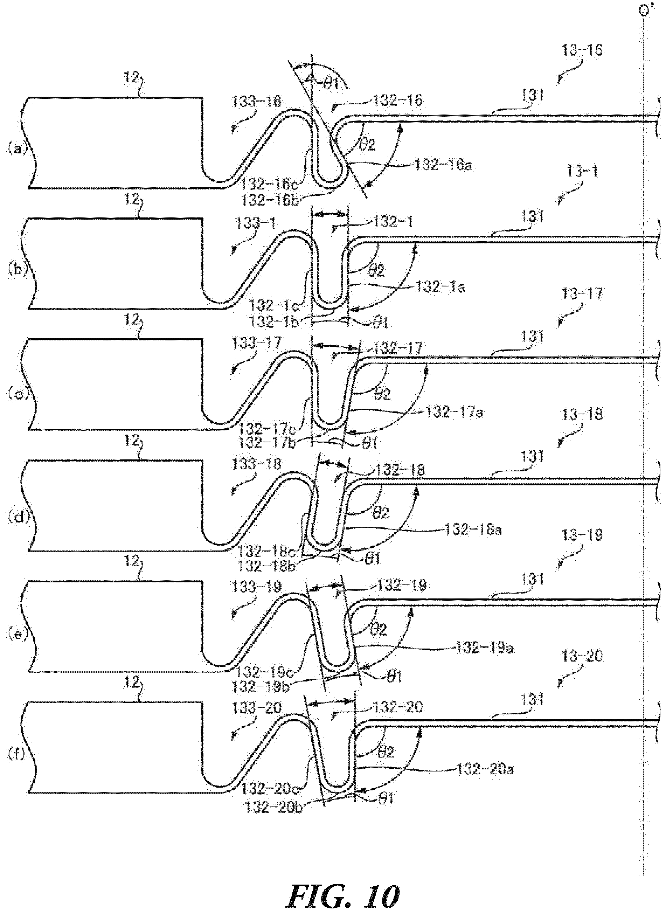

Fig. 10(a) to Fig. 10(f) illustrate a plurality of safety valves 13 including the grooves 132 in different shapes. A safety valve 13-16 illustrated in Fig. 10(a) includes a groove 132-16 on the outer edge of the flat part 131, and a recess 133-16 on the outer edge of the groove 132-16.

In the cross-sectional view passing through the central axis O', the opening side of an inner circumferential side 132-16a of the groove 132-16 is inclined to the opposite side of the central axis O', and therefore the opening diameter of the groove 132-16 is smaller than the diameter of the internal space on the bottom 132-16b side. In this regard, the safety valve 13-16 illustrated in Fig. 10(a) is different from the safety valve 13-1 illustrated in Fig. 5(a), but may have the same configuration as that of the safety valve 13-1 except for that. For example, in the cross-sectional view passing through the central axis O', the angle Θ1 formed by (the straight part of) an outer circumferential side 132-16c and (the straight part of) the inner circumferential side 132-16a around the bottom 132-16b of the groove 132-16 may be -30 degrees. In this case, in the safety valve 13-16, the angle Θ2 formed by the flat part 131 and (the straight line of) the inner circumferential side 132-16a may be 60 degrees, in the cross-sectional view passing through the central axis O'.

Fig. 10(b) illustrates the safety valve 13-1 illustrated in Fig. 5(a). As described above, in the safety valve 13-1, the straight part of the outer circumferential side 132-1c and the straight part of the inner circumferential side 132-1a of the groove 132-1 may be parallel to one another. That is, in the cross-sectional view passing through the central axis O', the angle Θ1 formed by (the straight part of) the outer circumferential side 132-1c and (the straight part of) the inner circumferential side 132-1a around the bottom 132-1b of the groove 132-1 may be 0 degrees. In addition, in the safety valve 13-1, the angle Θ2 formed by the flat part 131 and (the straight line of) the inner circumferential side 132-1a may be 90 degrees, in the cross-sectional view passing through the central axis O'.

A safety valve 13-17 illustrated in Fig. 10(c) includes a groove 132-17 on the outer edge of the flat part 131, and a recess 133-17 on the outer edge of the groove 132-17. In the cross-sectional view passing through the central axis O', the groove 132-17 has a shape obtained by inclining the opening side of the inner circumferential side 132-1a of the groove 132-1 illustrated in Fig. 10(b) toward the central axis O'. Therefore, the distance (groove width L) between the inner circumferential side 132-17a and an outer circumferential side 132-17c of the groove 132-17 is gradually increased from a bottom 132-17b to the opening side (that is, the opening diameter is greater than the diameter of the internal space on the bottom 132-17b side). For example, in the cross-sectional view passing through the central axis O', the angle Θ1 formed by (the straight part of) the outer circumferential side 132-17c and (the straight part of) the inner circumferential side 132-17a around the bottom 132-17b of the groove 132-17 may be 10 degrees. In this case, in the safety valve 13-17, the angle Θ2 formed by the flat part 131 and (the straight line of) the inner circumferential side 132-17a may be 100 degrees, in the cross-sectional view passing through the central axis O'. In this regard, the safety valve 13-17 illustrated in Fig. 10(c) is different from the safety valve 13-1 illustrated in Fig. 10(b), but may have the same configuration as that of the safety valve 13-1 except for that.

A safety valve 13-18 illustrated in Fig. 10(d) includes a groove 132-18 on the outer edge of the flat part 131, and a recess 133-18 on the outer edge of the groove 132-18. The straight part of an outer circumferential side 132-18c and the straight part of an inner circumferential side 132-18a of the groove 132-18 may be parallel to one another. That is, in the cross-sectional view passing through the central axis O', the angle Θ1 formed by (the straight part of) the outer circumferential side 132-18c and (the straight part of) the inner circumferential side 132-18a around a bottom 132-18b of the groove 132-18 may be 0 degrees. Here, the opening side of the groove 132-18 is inclined to the central axis O'. To be more specific, in the safety valve 13-18, the angle Θ2 formed by the flat part 131 and (the straight part) of the inner circumferential side 132-18a may be 100 degrees, in the cross-sectional view passing through the central axis O'. In this regard, the safety valve 13-18 illustrated in Fig. 10(d) is different from the safety valve 13-1 illustrated in Fig. 10(b), but has the same configuration as that of the safety valve 13-1 except for that.

A safety valve 13-19 illustrated in Fig. 10(e) includes a groove 132-19 on the outer edge of the flat part 131, and a recess 133-19 on the outer edge of the groove 132-19. The straight part of an outer circumferential side 132-19c and the straight part of an inner circumferential side 132-19a of the groove 132-19 may be parallel to one another. That is, in the cross-sectional view passing through the central axis O', the angle Θ1 formed by (the straight part of) the outer circumferential side 132-19c and (the straight part of) the inner circumferential side 132-19a around a bottom 132-19b of the groove 132-19 may be 0 degrees. Here, the opening side of the groove 132-19 is inclined to the opposite side of the central axis O'. To be more specific, in the safety valve 13-19, the angle Θ2 formed by the flat part 131 and (the straight part) of the inner circumferential side 132-19a may be 80 degrees, in the cross-sectional view passing through the central axis O'. In this regard, the safety valve 13-19 illustrated in Fig. 10(e) is different from the safety valve 13-1 illustrated in Fig. 10(b), but may have the same configuration as that of the safety valve 13-1 except for that.

A safety valve 13-20 illustrated in Fig. 10(f) includes a groove 132-20 on the outer edge of the flat part 131, and a recess 133-20 on the outer edge of the groove 132-20. The groove 132-20 has a shape obtained by inclining the opening side of the outer circumferential side 132-1c of the groove 132-1 illustrated in Fig. 10(b) toward the opposite side of the central axis O'. Therefore, the distance (groove width L) between an inner circumferential side 132-20a and an outer circumferential side 132-20c of the groove 132-20 is gradually increased from a bottom 132-20b to the opening side. For example, in the cross-sectional view passing through the central axis O', the angle Θ1 formed by (the straight part of) the outer circumferential side 132-20c and (the straight part of) the inner circumferential side 132-20a around the bottom 132-20b of the groove 132-20 may be 10 degrees. In this case, in the safety valve 13-20, the angle Θ2 formed by the flat part 131 and (the straight line of) the inner circumferential side 132-20a may be 90 degrees, in the cross-sectional view passing through the central axis O'. In this regard, the safety valve 13-20 illustrated in Fig. 10(f) is different from the safety valve 13-1 illustrated in Fig. 10(b), but may have the same configuration as that of the safety valve 13-1 except for that.

On the basis of Fig. 10(a) to Fig. 10(f) as described above, in the safety valve 13, for example, the angle Θ1 formed by (the straight part of) the outer circumferential side 132c and (the straight part of) the inner circumferential side 132a around the bottom 132b of the groove 132 may be -45 degrees to 60 degrees, and the angle Θ2 formed by the flat part 131 and (the straight part of ) the inner circumferential side 132a may be 45 degrees to 135 degrees, in the cross-sectional view passing through the central axis O'. When the angle Θ1 is reduced, it makes it hard to open between the inner circumferential side 132a and the outer circumferential side 132c around the bottom 132b of the groove 132, and therefore the pressure resistance against the internal pressure is raised. However, in consideration of making it easy to manufacture the groove 132, it is preferred that the angle Θ1 is 0 degrees, and the angle Θ2 is 90 degrees.

### <Deformation and Opening of Safety valve>

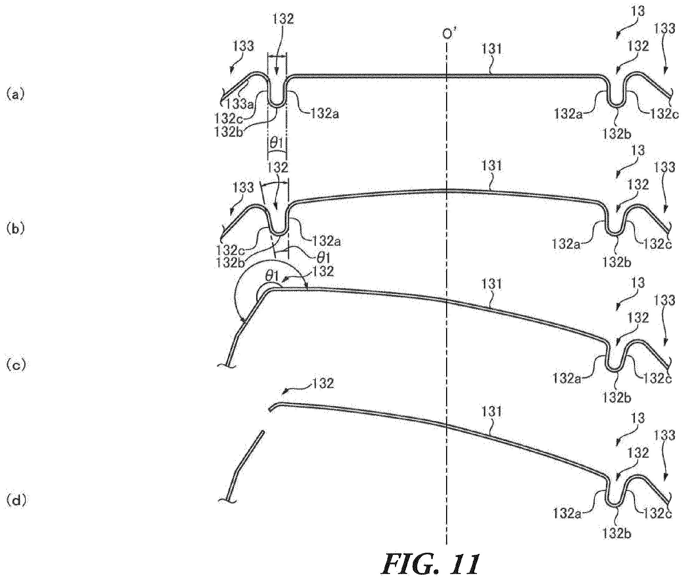

Next, an example of actions of the safety valve 13 when the safety valve 13 is deformed by the internal pressure of the battery case 1 and opened will be described with reference to Fig. 11.

Fig. 11(a) to Fig. 11(d) are cross-sectional views passing through the central axis O' of the safety valve 13 formed in the lid 12. As illustrated in Fig. 11(a), the safety valve 13 including the flat part 131, the groove 132, and the recess 133 is formed in the lid 12. Here, in Fig. 11(a), the angle Θ1 formed by (the straight part of) the outer circumferential side 132c and (the straight part of) the inner circumferential side 132a around the bottom 132b of the groove 132 may be, for example, 0 degrees.

When the internal pressure of the battery case 1 with this lid 12 rises, the inner surface of the flat part 131 is subjected to the rising internal pressure, and deformed to be convexly curved outward from the lid 12 in the cross-sectional view passing through the central axis O', as illustrated in Fig. 11(b). In addition, the bottom 132b of the groove 132 is subjected to the rising internal pressure, and is deformed to increase the angle Θ1 formed by (the straight part of) the outer circumferential side 132c and (the straight part of) the inner circumferential side 132a around the bottom 132b of the groove 132 in the cross-sectional view passing through the central axis O'. By this means, the inside depth of the groove 132 formed by the inner circumferential side 132a, the bottom 132b and the outer circumferential side 132c is decreased. Here, the angle Θ1 illustrated in Fig. 11(b) may be, for example, 20 degrees.

As illustrated in Fig. 11(b), the rigidity of the groove 132 prevents significant plastic deformation until the internal pressure of the battery case 1 is raised to the predetermined explosion-proof pressure. After that, when the internal pressure of the battery case 1 is equal to or higher than the predetermined explosion-proof pressure, the concave shape of the groove 132 is reversed (buckled) so as to protrude outward from the battery case 1 as illustrated in Fig. 11(c). At this time, significant plastic deformation of the groove 132 occurs (the angle Θ1 illustrated in Fig. 11(c) may be, for example, 230 degrees). By this means, the groove 132 is cracked, and therefore opened as illustrated in Fig. 11(d). Then, the opening of the cracked groove 132 is enlarged and spread peripherally.

As described above, in the safety valve 13, the boundary of the outer circumferential side 132c of the groove 132 with the part formed on the outer edge of the groove 132 (for example, the boundary between the outer circumferential side 132c of the groove 132 and the inner circumferential side 133a of the recess 133) has a curved shape without any corner, in the cross-sectional view passing through the central axis O'. In the safety valve 13, as the internal pressure of the battery case 1 is raised, the curved shape of the boundary is gradually widened, and the inside depth of the curved shape of the groove is gradually decreased during the course from the state in Fig. 11(a) to the state in Fig. 11(c) via the state in Fig. 11(b). In this case, the curved shape has no corner, and therefore the stress for the internal pressure of the battery case 1 does not focus on corners. Therefore, the curved shape is gradually and smoothly widened without cracking as the internal pressure is raised.

In addition, in the safety valve 13, not only the boundary of the outer circumferential side 132c of the groove 132 with the part formed on the outer edge of the groove 132 (for example, the boundary between the outer circumferential side 132c of the groove 132 and the inner circumferential side 133a of the recess 133), but also the bottom 132b, and the boundary of the inner circumferential side 132a of the groove 132 with the flat part 131 have a curved shape without any corner, in the cross-sectional view passing through the central axis O'.

By this means, in the safety valve 13, when the internal pressure of the battery case 1 is raised until becoming the predetermined explosion-proof pressure, each of the boundary of the outer circumferential side 132c of the groove 132 with the part formed on the outer edge of the groove 132 (for example, the boundary between the outer circumferential side 132c of the groove 132 and the inner circumferential side 133a of the recess 133), the bottom 132b, and the boundary of the inner circumferential side 132a with the flat part 131 has no corner on which the stress for the internal pressure of the battery case 1 focuses. Consequently, the groove is not cracked but the curved shape is gradually and smoothly widened.

Then, in the safety valve 13, while the groove 132 is widened without the cracking, when the internal pressure of the battery case 1 becomes the predetermined explosion-proof pressure, the concave shape of the groove 132 is smoothly reversed, and significant plastic deformation occurs, and therefore the groove 132 is cracked, and consequently opened.

Here, when the groove 132 is opened by the cracking, the flat part 131 is not separated from but still integrated with the part of the safety valve 13 connecting to the groove 132. Therefore, it is possible to prevent the flat part 131 from being separated and flying off when the groove is opened, and consequently to assure the safety.

The gas generated in the battery case 1 is released from the opening to the outside of the battery case 1. In this way, it is possible to prevent the battery case 1 from being severely broken, and therefore to assure the safety as the secondary battery.

Even though the safety valve 13 according to the present embodiment does not have the structure as a conventional notch, it is possible to maintain the pressure resistance against the internal pressure of the battery case 1 by adjusting the above-described various sizes (diameter D1, diameter D2, angle Θ1, angle Θ2, height H1, height H2, groove width L, and R dimension) and the shapes, and to surely produce the cracking when the internal pressure is equal to or higher than the predetermined explosion-proof pressure. That is, the safety valve 13 does not have problems that, for example, the cracking does not occur in the state of Fig. 11(c), and the cracking occurs before the state of Fig. 11(c).

### <Forming of Safety valve>

The safety valve 13 according to the present embodiment can be formed by, for example, press molding as follows. First, a plate material made of metal such as aluminum and aluminum alloy to form the lid 12 is prepared. Next, a pair of press dies including a male die and a female die in the shape of the safety valve 13 is attached to a pressing machine.

Next, the lid 12 is inserted between the male die and the female die so that the upper flat surface of the lid 12 faces the male die and the lower flat surface faces the female die, and a predetermined pressure is applied to the flat surfaces of the lid 12 in the up-and-down direction, at approximately the center of the lid 12 in the longitudinal direction of the plane of the lid 12. By this press molding, the lid 12 is bent and drawn out, and the safety valve 13 is formed at approximately the center of the lid 12 in the longitudinal direction of the plane of the lid 12, as illustrated in Fig. 2. The predetermined pressure applied to the lid is not particularly limited, but may be, for example, 500 MPa to 150 MPa.

In the safety valve 13 according to the present embodiment, as described above, when the internal pressure of the battery case 1 is equal to or higher than the predetermined explosion-proof pressure, the concave shape of the groove 132 is reversed to protrude outward from the battery case 1, and therefore the groove 132 is cracked and consequently opened. Therefore, for example, as the conventional safety valve including a notch, the safety valve 13 does not need adjustment to reduce its thickness within an allowance of 10 to several tens of um to control the internal pressure (explosion-proof pressure) when the groove is opened, and therefore can be easily manufactured without high-precision equipment and manufacturing technology.

Accordingly, when the safety valve 13 is manufactured, there is no problem of reducing the yield until the size (dimension) of the thickness is stabilized, and therefore it is possible to improve the productivity. In addition, the safety valve 13 does not have a complicated structure having a small thickness, and therefore it is possible to prevent the cracking from occurring, and easily conduct tests.

### <Modification>

The technical features of the above-described embodiment including a modification can be applied to each other. The above-described embodiment does not limit the subject matter of the invention, and can be modified without departing from the claims.

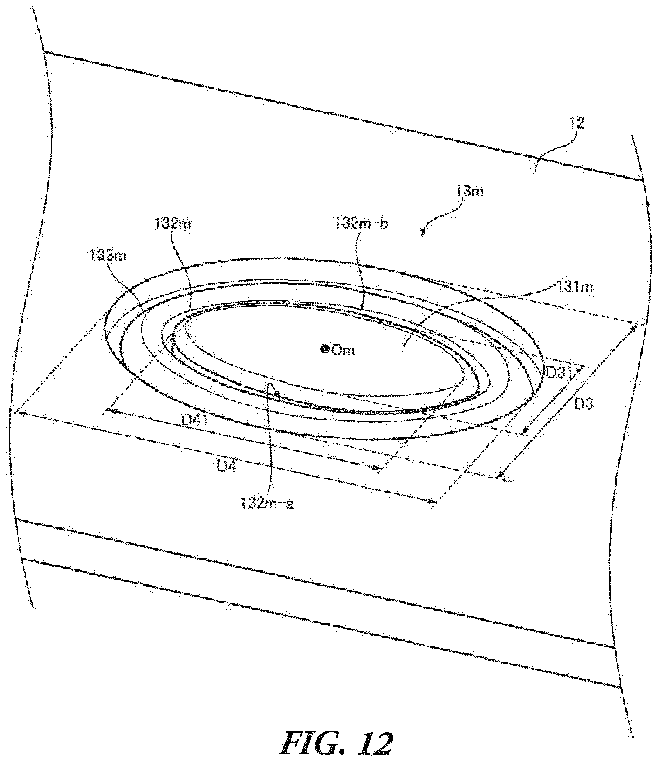

The shape of the safety valve 13 is not limited to an approximately circular shape as described above, but other shapes are possible, for example, an approximately elliptical shape is possible as illustrated in Fig. 12.

A safety valve 13m illustrated in Fig. 12 has an approximately elliptical shape around a central point Om. The safety valve 13m includes a flat part 131m having an approximately elliptical shape, a groove 132m formed on the outer edge of the flat part 131m, and a recess 133m formed on the outer edge of the groove 132m. Shorter diameter D3 passing through the central point Om of the safety valve 13m is not particularly limited, but may be, for example, 7 mm to 15 mm. In addition, longer diameter D4 passing through the central point Om of the safety valve 13m is not particularly limited, but may be, for example, 12 mm to 20 mm. Moreover, shorter diameter D31 passing through the central point Om of the flat part 131m is not particularly limited, but may be, for example, 5 mm to 10 mm. Furthermore, longer diameter D41 passing through the central point Om of the flat part 131m is not particularly limited, but may be, for example, 10 mm to 15 mm.

Also in the safety valve 13m, when the internal pressure of the battery case 1 is equal to or higher than the predetermined explosion-proof pressure, the concave shape of the groove 132m is reversed to protrude outward from the battery case 1, and therefore groove 132m is cracked and consequently opened, in the same way as the above-described safety valve 13 having an approximately circular shape. In this case, a shorter diameter end 132m-a and a shorter diameter end 132-b having the maximum radius of curvature of the approximately elliptical shape may be first opened in the groove 132m.

Here, the shape of the safety valve 13 is not limited to the approximately circular shape and the approximately elliptical shape, but other shapes are possible as long as there is no corner as described above.

Moreover, with the above-described embodiments, the safety valve 13 is formed in the lid 12 which is the end plate of the battery case (battery housing) 1, but this is by no means limiting. The safety valve 13 may be formed in any of the front surface 11a, the back surface 11b, the side surface 11c, the side surface 11d, and the bottom surface 11e of the storage 11 of the battery case 1. Here, the basic configuration including the material and the plate thickness to form the front surface 11a, the back surface 11b, the side surface 11c, the side surface 11d, and the bottom surface 11e may be the same as those of the above-described lid 12.

### Reference Signs List

1 battery case, 11 storage, 12 lid, 13 safety valve,
131 flat part, 132 groove, 132a inner circumferential side,
132b bottom, 132c outer circumferential side, 133 recess,
133a inner circumferential side, 133b bottom,
133c outer circumferential side, 13m safety valve,
131m flat part, 132m groove, 133m recess

## Claims

1. A safety valve having a thickness partially reduced in a battery case, comprising:
a flat part; and
a groove formed around the flat part and being concave toward an inside of the battery case,
wherein when an internal pressure of the battery case is equal to or higher than a predetermined explosion-proof pressure, a concave shape of the groove is reversed to protrude outward from the battery case, so that the groove is cracked and therefore opened.

2. The safety valve according to claim 1, wherein:
the groove includes an inner circumferential side connecting to the flat part, a bottom connecting to the inner circumferential side, and an outer circumferential side connecting to the bottom; and
when the internal pressure of the battery case is raised, the groove is deformed to increase an angle formed by the outer circumferential side and the inner circumferential side around the bottom of the groove, in a cross-sectional view passing through a central axis of the safety valve.

3. The safety valve according to claim 2, wherein a boundary of the outer circumferential side of the groove with a part formed on an outer edge of the groove has a curved shape without any corner, in the cross-sectional view passing through the central axis of the safety valve.

4. The safety valve according to one of claims 2 and 3, wherein, in the cross-sectional view passing through the central axis of the safety valve, an angle formed by the outer circumferential side and the inner circumferential side of the groove is -45 degrees to 60 degrees, and an angle formed by the flat part and the inner circumferential side is 45 degrees to 135 degrees.

5. The safety valve according to one of claims 1 to 4, wherein the flat part has one of an approximately circular shape and an approximately elliptical shape in a plan view of the flat part.

6. The safety valve according to one of claims 1 to 5, wherein the safety valve is formed at approximately a center of a lid of the battery case in a longitudinal direction of a plane of the lid.

7. The safety valve according to one of claims 1 to 5, wherein the safety valve is formed in a storage of the battery case.

8. A battery case including the safety valve according to one of claims 1 to 7.

9. A method of forming a safety valve having a thickness partially reduced in a battery case, comprising applying a pressure to the battery case in a thickness direction by using a shaping die to form the safety valve, the safety valve including:
a flat part; and
a groove formed around the flat part and being concave toward an inside of the battery case,
wherein when an internal pressure of the battery case is equal to or higher than a predetermined explosion-proof pressure, a concave shape of the groove is reversed to protrude outward from the battery case, so that the groove is cracked and therefore opened.
